# EUROPEAN PATENT SPECIFICATION

(11) **EP 4 394 585 B1**
(45) Date of publication and mention of the grant of the patent: **25.02.2026**
(21) Application number: 23802565.4
(22) Date of filing: 10.04.2023
(51) Int. Cl.: G06F 8/65, G06F 8/654, G06F 9/445, G06F 11/14

(54) **UPGRADE METHOD BASED ON BASIC INPUT OUTPUT SYSTEM (BIOS) AND TERMINAL DEVICE**
AUFRÜSTUNGSVERFAHREN AUF BASIS EINES BASISEINGABEAUSGABESYSTEMS (BIOS) UND ENDGERÄTEVORRICHTUNG
PROCÉDÉ DE MISE À NIVEAU BASÉ SUR UN SYSTÈME ÉLÉMENTAIRE D'ENTREE/SORTIE (BIOS) ET DISPOSITIF TERMINAL

(30) Priority: 13.05.2022 CN 202210521958
(43) Date of publication of application: 03.07.2024
(73) Proprietor: Honor Device Co., Ltd., Shenzhen, Guangdong 518040 (CN)
(72) Inventor: XIANG, Chao, Shenzhen, Guangdong 518040 (CN)
(74) Representative: Epping - Hermann - Fischer
(86) International application number: PCT/CN2023/087368
(87) International publication number: WO 2023/216790

(56) References cited:
- CN-A- 1 991 681
- CN-A- 103 150 231
- CN-A- 110 399 153
- CN-A- 110 750 287
- CN-A- 114 089 714
- TW-A- 200 611 195
- US-A- 5 513 359
- US-A1- 2006 236 132
- US-B1- 9 110 679

## Description

This application claims priority to Chinese Patent Application No. 202210521958.X, filed with the China National Intellectual Property Administration on May 13, 2022 and entitled "BASIC INPUT OUTPUT SYSTEM BIOS-BASED UPGRADE METHOD AND TERMINAL DEVICE".

### TECHNICAL FIELD

This application relates to the field of terminal technologies, and in particular, to a basic input output system BIOS-based upgrade method and a terminal device.

### BACKGROUND

A basic input output system (basic input output system, BIOS) may be understood as a set of programs running in a power-on process of a terminal device. A BIOS version in the terminal device needs to be updated. As an example, if an old BIOS version has a program bug, the terminal device needs to upgrade the old BIOS version to a new BIOS version. An example of the terminal device is a personal computer (personal computer, PC).

Currently, during BIOS upgrade performed by the personal computer (personal computer, PC), it often occurs that the BIOS upgrade fails when a user presses a power button. This reduces a BIOS upgrade rate. If the BIOS upgrade fails, the PC cannot be used normally, affecting a power-on success rate and efficiency of the PC.

CN 110 399 153 A relates to a system upgrade method applied to a terminal, wherein before the upgrade of the current to-be-upgraded partition of the terminal, detecting whether the terminal generates an event for triggering the terminal to be powered off; if the terminal generates an event for triggering the terminal to be powered off, suspending upgrading the currently to-be-upgraded partition.

### SUMMARY

This application provides a basic input output system BIOS-based upgrade method and a terminal device, to improve a BIOS upgrade rate. The invention is set out in the appended claims.

According to a first aspect, a basic input output system BIOS-based upgrade method according to claim 1 is provided, including: downloading a target BIOS version of a terminal device from a server; restarting the terminal device; obtaining a state of a power button of the terminal device during power-on of the terminal device; suspending upgrade if the power button is in a pressed state and a pressed time period exceeds a preset time length; or upgrading the terminal device based on the target BIOS version if the power button is not in a pressed state or a pressed time period of the power button does not exceed a preset time length.

The target BIOS version may be understood as a new version of BIOS. When the terminal device detects that the new version of BIOS has been released, the new version of BIOS may be downloaded from the server.

After obtaining the target BIOS version from the server, the terminal device is ready to upgrade. The terminal device may be restarted and upgraded during powering on. After the power-on is completed, a user may use the target BIOS version.

During upgrading the terminal device, the terminal device is upgraded based on the target BIOS version if the power button is not in the pressed state or the pressed time period of the power button does not exceed the preset time length. If the pressed time period of the power button exceeds the preset time length and the upgrade is not suspended, the upgrade may be forcibly interrupted, causing an upgrade failure, so that software or hardware of the terminal device may be damaged. Therefore, in this application, when the power button is in the pressed state and the pressed time period exceeds the preset time length, the terminal device suspends the upgrade to prevent the upgrade form being forcibly interrupted and facilitate improving a BIOS upgrade rate. The preset time length may be 10 seconds, but this is not limited in this application.

The upgrading the terminal device based on the target BIOS version if the power button is not in a pressed state or the power button is in the pressed state and a pressed time period does not exceed a preset time length includes: detecting whether the terminal device is connected to a power adapter if the power button is not in the pressed state; or upgrading the terminal device based on the target BIOS version if the terminal device is connected to the power adapter and battery power in the terminal device satisfies a first condition.

The first condition is that the battery power is greater than preset power. First preset power is 30%. Before upgrading the terminal device, whether the power button is in the pressed state may be detected. Then, when the power button is not in the pressed state, whether the terminal device is connected to the power adapter and whether the battery power satisfies the first condition are detected. When the power adapter is connected and the battery power satisfies the first condition, the upgrade is performed.

During the upgrade, when the power button is not in the pressed state, it is determined whether conditions for the upgrade are satisfied (where the power adapter is connected and the battery power satisfies the first condition). If the conditions for the upgrade are satisfied, the terminal device is upgraded, facilitating avoiding an upgrade failure due to insufficient battery during the upgrade and increasing the BIOS upgrade rate.

With reference to the first aspect, in some implementations of the first aspect, the method further includes: displaying prompt information if the power button is in the pressed state, where the prompt information is for prompting a user that the power button is in the pressed state.

When the power button is in the pressed state, the terminal device may display the prompt information to prompt the user that the power button is touched. If the user touches the power button by mistake, the user may cancel an operation of pressing the power button by viewing the prompt information.

The terminal device includes a lid. The obtaining a state of a power button of the terminal device during power-on of the terminal device includes: obtaining a state of the lid during the power-on of the terminal device; suspending the upgrade if the lid is in a closed state; or obtaining the state of the power button if the lid is in an open state.

Before the state of the power button is obtained, the state of the lid may be determined. When the state of the lid is the closed state, the upgrade is suspended. This can avoid overheating due to the upgrade and reduce a probability of the upgrade failure. When the state of the lid is the open state, the state of the power button may be obtained again, and whether to upgrade is determined based on the state of the power button.

The upgrading the terminal device based on the target BIOS version if the power button is not in a pressed state or a pressed time period of the power button does not exceed a preset time length includes: obtaining, if the pressed time period of the power button does not exceed the preset time length, the terminal device is connected to the power adapter, and the battery power in the terminal device satisfies the first condition, the state of the power button; suspending the upgrade if the power button is in the pressed state; or upgrading the terminal device based on the target BIOS version if the power button is in the pressed state and the pressed time period does not exceed the preset time length.

When the power button is in the pressed state and the pressed time period does not exceed the preset time length, and the terminal device satisfies the upgrade conditions (where the power adapter is connected and the battery power in the terminal device satisfies the first condition), the terminal device may further obtain the state of the power button to determine again whether to upgrade. The terminal device is upgraded based on the target BIOS version if the power button is in the pressed state and the pressed time period does not exceed the preset time length.

In the BIOS-based upgrade method provided in embodiments of this application, before it is determined whether the upgrade conditions are satisfied, the pressed time period of the power button does not exceed the preset time length. After the upgrade conditions are satisfied, the state of the power button is obtained again to determine whether to upgrade. During the entire upgrade, the state of the power button is obtained several times to determine whether to upgrade. This facilitates avoiding the forced interruption that may cause the upgrade failure during the upgrade, and improving the BIOS upgrade rate.

With reference to the first aspect, in some implementations of the first aspect, the method further includes: suspending the upgrade if the terminal device is not connected to the power adapter and the battery power in the terminal device does not satisfy a second condition, where the first condition is different from the second condition.

The second condition is that the battery power is greater than second preset power. The second preset power is 5%.

If the terminal device is not connected to the power adapter and the battery power in the terminal device does not satisfy the second condition, in this case, the battery power is insufficient to support the upgrade, and the terminal device may suspend the upgrade.

In this implementation, an upgrade failure due to low battery power can be avoided, and a BIOS upgrade rate can be improved.

With reference to the first aspect, in some implementations of the first aspect, the method further includes: obtaining, if the terminal device is not connected to the power adapter and the battery power in the terminal device satisfies the second condition, the state of the power button; continuing to detect, if the power button is not in the pressed state or the pressed time period of the power button does not exceed the preset time length, whether the battery power in the terminal device satisfies the second condition; or suspending the upgrade if the pressed time period of the power button exceeds the preset time length.

If the power button is not in the pressed state or the pressed time period of the power button does not exceed the preset time length, in this case, the terminal device is in a state of suppressing power consumption, and the terminal device continues to detect whether the battery power in the terminal device still satisfies the second condition.

If the pressed time period of the power button exceeds the preset time length, it indicates that the user does not want to upgrade, and the terminal device may suspend the upgrade to prevent the terminal device from being abnormal due to an upgrade failure.

With reference to the first aspect, in some implementations of the first aspect, the method further includes: recording a long press event and an upgrade state if the power button is in the pressed state and the pressed time period exceeds the preset time length.

With reference to the first aspect, in some implementations of the first aspect, after the upgrading the terminal device based on the target BIOS version if the power button is not in a pressed state or a pressed time period of the power button does not exceed a preset time length, the method further includes: counting the long press event and the upgrade state to analyze a cause for an upgrade failure.

According to a second aspect, this application provides an electronic device according to claim 7 including a processor and a memory. The processor is configured to read instructions stored in the memory, and may receive a signal by using a receiver and transmit a signal by using a transmitter, to perform the method according to any one of the possible implementations of the first aspect.

Optionally, the processor may be one or more, and the memory may be one or more.

Optionally, the memory may be integrated with the processor, or the memory and the processor may be separately arranged.

**In** a specific implementation process, the memory may be a non-transitory (non-transitory) memory, such as a read only memory (read only memory, ROM), and the memory and the processor may be integrated on a same chip, or may be arranged on different chips respectively. A type of the memory and an arrangement of the memory and the processor are not limited in embodiments of this application.

It should be understood that, a related data exchange process, such as sending indication information may be a process of outputting the indication information from the processor, and receiving ability information may be a process of receiving and inputting the ability information by the processor. Specifically, data outputted by the processor may be outputted to the transmitter, input data received by the processor may be from the receiver. The transmitter and the receiver may be collectively referred to as a transceiver.

The terminal device in the foregoing second aspect may be a chip, this processor may be implemented by hardware, or may be implemented by software. When the processor is implemented by the hardware, the processor may be a logic circuit, an integrated circuit, or the like. When the processor is implemented by the software, the processor may be a general-purpose processor and be implemented by reading software code stored in the memory, where the memory may be integrated inside the processor, or may be located outside the processor and exist independently.

According to a third aspect, a computer-readable storage medium according to claim 8 is provided. The computer-readable storage medium stores a computer program (which may also be referred to as code or instructions). When the computer program runs on a computer, the computer is enabled to perform the method according to any one of the possible implementations of the first aspect.

According to a fourth aspect, a computer program product according to claim 9 is provided, including: a computer program (which may also be referred to as code or instructions). When the computer program is run, a computer is enabled to perform the method according to any one of the possible implementations of the first aspect.

For beneficial effects of the possible implementations of the second aspect to the fifth aspect, reference may be made to the beneficial effects brought by the first aspect. This is not described herein again.

### BRIEF DESCRIPTION OF DRAWINGS

FIG. 1 is a schematic diagram of a BIOS upgrade failure;
FIG. 2 is a schematic flowchart of a BIOS upgrade method;
FIG. 3 is a schematic diagram of a structure of a terminal device according to an example of this application;
FIG. 4 is a block diagram of a software structure of a terminal device according to an embodiment of this application;
FIG. 5A and FIG. 5B are a schematic flowchart of a basic input output system BIOS-based upgrade method according to an embodiment of this application;
FIG. 6 is a schematic flowchart of another basic input output system BIOS-based upgrade method according to an embodiment of this application;
FIG. 7 is a schematic block diagram of a terminal device according to an embodiment of this application; and
FIG. 8 is a schematic block diagram of another terminal device according to an embodiment of this application.

### DESCRIPTION OF EMBODIMENTS

The following describes the technical solutions in this application with reference to accompanying drawings.

A basic input output system (basic input output system, BIOS) is a set of programs that are solidified onto a terminal motherboard. The BIOS stores a most important basic input output program of a terminal device, system setting information, a self-test program after powering on, and a system self-running program. In addition, the BIOS can also read and write a parameter on the motherboard for setting. In other words, the BIOS may provide the most basic and direct hardware setting and control for the terminal. Simply, the BIOS is a first program loaded during power-on of the terminal device. A setting of the BIOS is directly related to whether the terminal can be started normally and affects later efficiency of the terminal device. The Windows operating system also works under guidance of the BIOS.

In an embodiment, the BIOS may be regarded as a set of programs. If an old BIOS version has a program bug (bug), the terminal device needs to upgrade the old BIOS version to a new BIOS version, to repair the bug in the old BIOS version, to ensure smooth power-on of the terminal device or a normal operation of the Windows system.

Currently, during BIOS upgrade performed by a personal computer (personal computer, PC), it often occurs that the BIOS upgrade fails when a user presses a power button. This reduces a BIOS upgrade rate. If the BIOS upgrade fails, the PC cannot be used normally, affecting a power-on success rate and efficiency of the PC. The power button may also be referred to as a power-off button. This is not limited in embodiments of this application.

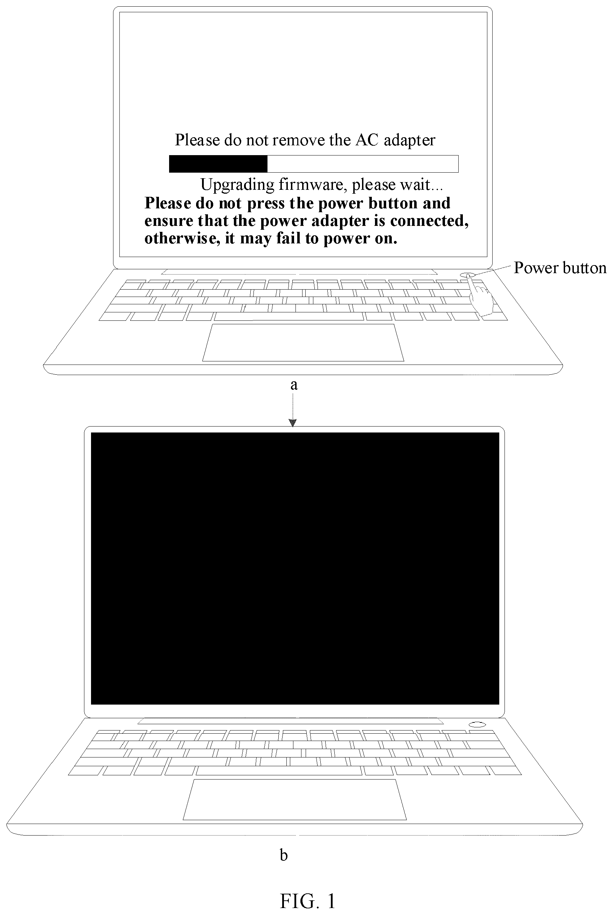

For example, FIG. 1 is a schematic diagram of a BIOS upgrade failure. As shown in an interface a in FIG. 1, during the BIOS upgrade of a PC, an upgrade progress bar may be displayed on the interface. The progress bar is for displaying upgrade progress, and text "Upgrading firmware, please wait" is displayed to inform a user that upgrade is in progress. The PC may also display prompt information "Do not press the power button and ensure that the power adapter is connected, otherwise it may fail to power on" in the interface. This prompt information is for prompting the user not to press the power button, to prevent the upgrade from failing due to the power button being pressed. That battery power is sufficient needs to be ensured during the upgrade of the PC. "Please do not remove the AC adapter" may be displayed on the interface to prompt the user not to remove the power adapter.

If the user does not pay attention to the prompt information on the interface and long presses the power button, or if the user mistakenly operates and long presses the power button, the PC is forced to power off, causing the upgrade failure. In this case, an interface b in FIG. 1 is displayed. As shown in the interface b in FIG. 1, when the BIOS upgrade fails, the interface of the PC is a blank screen. When the PC detects a power-on operation performed by the user, the upgrade process of the BIOS is repaired. After the PC is successfully upgraded, the PC can be used normally. If the BIOS upgrade fails and causes software damage, the PC may repair the upgrade process of the BIOS and the repair may be successful. If the BIOS upgrade fails and causes hardware damage, the PC cannot repair the upgrade process of the BIOS, and maintenance personnel are needed to repair the upgrade process of the BIOS, affecting normal use of the user.

To study a cause for the BIOS upgrade failure, embodiments of this application study an upgrade process of the BIOS in conventional technologies.

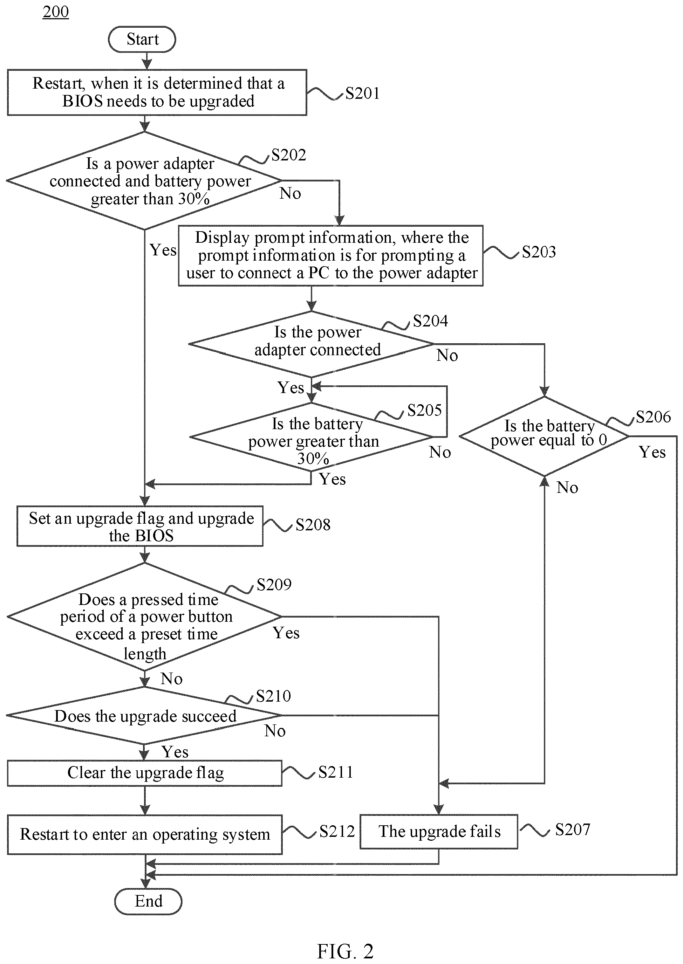

FIG. 2 is a schematic flowchart of a BIOS upgrade method 200. As shown in FIG. 2, the method 200 may include the following steps.

S201. Restart, when it is determined that a BIOS needs to be upgraded.

BIOS upgrade needs to be performed during power-on of a PC. Therefore, when the PC determines that the BIOS needs to be upgraded (in other words, when a new version of BIOS is detected), the PC is restarted for powering on, thereby upgrading the BIOS during the power-on of the PC. It should be understood that the BIOS upgrade is from a perspective of the BIOS, where the BIOS is upgraded to the new version of BIOS, and that the PC upgrades the BIOS is from a perspective of the PC, where the PC upgrades the BIOS to the new BIOS version, but regardless of perspectives, the BIOS is upgraded from the old version to the new version.

S202. Detect whether a power adapter is connected and whether battery power is greater than 30%. Restating the PC includes processes of powering off the PC and powering on the PC again. In the conventional technologies, during restarting the PC, because the BIOS needs to be upgraded, to ensure the smooth BIOS upgrade, the battery power of the PC and whether the PC is connected to the power adapter need to be detected to prevent the PC from powering off due to low battery power and interrupting the BIOS upgrade.

In the conventional technologies, during restarting the PC, it is necessary to detect whether the battery power of the PC is greater than 30% and whether the PC is connected to the power adapter. When the battery power of the PC is greater than 30% and the PC is connected to the power adapter, the BIOS can be upgraded. When the battery power of the PC is less than or equal to 30% and/or the PC is not connected to the power adapter, the BIOS cannot be upgraded.

If the battery power of the PC is greater than 30% and the PC is connected to the power adapter, the PC can perform S208. If the battery power of the PC is less than or equal to 30% and/or the PC is not connected to the power adapter, the PC can perform S203.

S203. Display prompt information if the battery power of the PC is less than or equal to 30% and/or the PC is not connected to the power adapter, where the prompt information is for prompting a user to connect the PC to the power adapter.

When the battery power of the PC is less than or equal to 30% and/or the PC is not connected to the power adapter, the PC does not satisfy conditions of the BIOS upgrade. Therefore, to improve a BIOS upgrade rate, the PC may display the prompt information on an interface. The prompt information is for prompting the user to connect the PC to the power adapter, so that an external power supply can charge the PC through the power adapter. In this way, the PC satisfies the conditions of the BIOS upgrade to upgrade the BIOS.

S204. Detect whether the power adapter is connected.

The PC detects whether the user connects the PC to the power adapter due to seeing the prompt information.

If the user connects the PC to the power adapter, the PC can detect that the power adapter is connected. In this way, S205 can be performed. If the user does not connect the PC to the power adapter, the PC can detect that the power adapter is not connected. In this way, S206 can be performed.

S205. Detect whether the battery power is greater than 30% if it is detected that the power adapter is connected.

If it is detected that the power adapter is connected, the PC further detects whether the battery power is greater than 30%. If the battery power is greater than or equal to 30%, the condition of the BIOS upgrade is satisfied, the BIOS can be continuously upgraded. In other words, S208 can be performed. If the battery power is less than or equal to 30%, the conditions of the BIOS upgrade are not satisfied, it is necessary to continuously detect whether the battery power is greater than 30%. In this case, the power adapter is charging until it is detected that the battery power is greater than 30%.

S206. Detect whether the battery power is greater than 0 if it is detected that the power adapter is not connected.

If it is detected that the power adapter is not connected and the PC is still in a power consumption state, the condition of the BIOS upgrade is not satisfied, whether the battery power is greater than 0 may be detected, that is, whether the PC can support running. If the battery power is greater than 0, the PC can support the running. However, the battery power is not insufficient for the PC to support the upgrade, and then the upgrade fails.

If the battery power is equal to 0, the PC cannot support the running, the upgrade is terminated abnormally.

S207. The upgrade fails if the battery power is greater than 0.

The upgrade failure indicates that the BIOS is not upgraded from the old version to the new version. S208. Set an upgrade flag and upgrade the BIOS if the battery power of the PC is greater than 30% and the PC is connected to the power adapter.

The upgrade flag (flag) indicates to upgrade. When the upgrade flag is detected, the PC can upgrade the BIOS.

S209. Detect whether a pressed time period of a power button exceeds a preset time length.

The preset time length may be 10s, but this is not limited in embodiments of this application.

During a process in which the PC upgrades the BIOS, that the power button is pressed is detected, and whether the pressed time period exceeds the preset time length is determined. If the pressed time period exceeds the preset time length, S207 may be performed. In other words, the upgrade fails. If the pressed time does not exceed the preset time length, S210 may be performed.

S210. Detect whether the upgrade succeeds if the pressed time period of the power button does not exceed the preset time length.

If the pressed time period of the power button does not exceed the preset time length, the PC can upgrade the BIOS and determine whether the upgrade succeeds, that is, determine whether the BIOS is upgraded to the new version of BIOS.

If the upgrade succeeds, the PC can perform S211. Otherwise, the PC can perform S207. In other words, the upgrade fails.

S211. Clear the upgrade flag if the upgrade succeeds.

When no upgrade flag exists, the PC cannot detect the upgrade flag. Therefore, the BIOS upgrade may not be performed.

S212. Restart to enter an operating system (operating system, OS).

It may be learned that in the method 200, during the process in which the PC upgrades the BIOS, if it is detected that the user long presses the power button, the upgrade is interrupted, resulting in the upgrade failure and reducing the BIOS upgrade rate.

In addition, it is also found that in embodiments of this application, during the process in which the PC upgrades the BIOS, if the user closes a PC lid, the PC may not stop the upgrade. If the user puts the PC in a computer package, the PC may overheat due to the upgrade. When detecting that a temperature is excessively high, the PC may stop the upgrade, resulting in an upgrade failure and reducing the BIOS upgrade rate.

In view of this, embodiments of this application provide a basic input output system BIOS-based upgrade method and a terminal device, to improve the BIOS upgrade rate.

The method provided in embodiments of this application is applicable to the terminal device, such as the foregoing PC, but embodiments of the present application are not limited thereto. For example, the terminal device may alternatively be a wearable terminal device such as a mobile phone, a tablet computer, a smartwatch, and may alternatively be a variety of teaching auxiliary tools (such as a learning machine and an early education machine), a smart toy, a portable robot, a personal digital assistant (personal digital assistant, PDA), an augmented reality (augmented reality, AR) device, a virtual reality (virtual reality, VR) device, or the like.

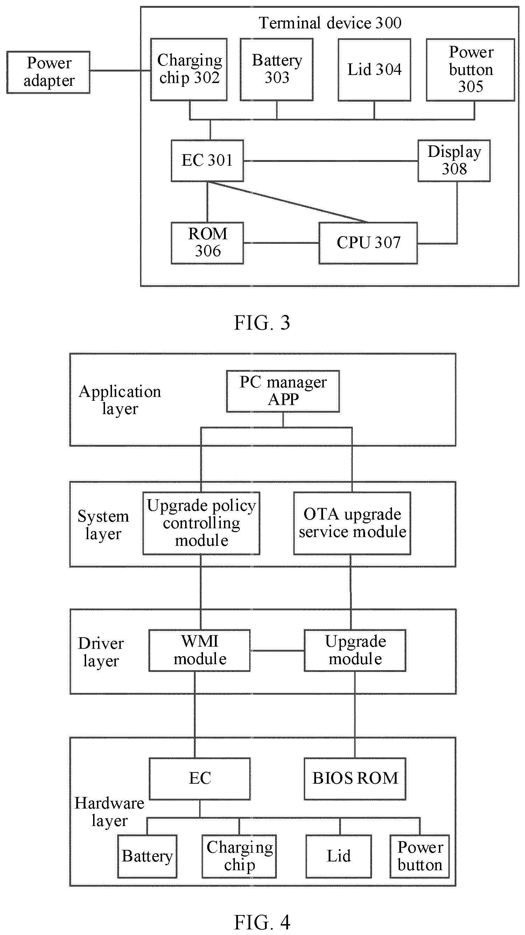

To better understand embodiments of this application, the following describes a hardware structure of the terminal device in embodiments of this application. For example, FIG. 3 is a schematic diagram of a structure of a terminal device according to an embodiment of this application.

As shown in FIG. 3, a terminal device 300 may include an embedded controller (embedded controller, EC) 301, a charging chip 302, a battery 303, a lid 304, a power button 305, a read-only memory (read-only memory, ROM) 306, a central processing unit (central processing unit, CPU) 307, and a display 308.

The EC 301 is separately connected to the charging chip 302, the battery 303, the lid 304, the power button 305, the ROM 306, the CPU 307, and the display 308. In an embodiment, the EC 301 may be replaced with another type of controller, such as a micro controller unit (micro controller unit, MCU), or an integrated IC module of an MCU chip and the EC.

In an embodiment, the EC 301 may be connected to the battery 303 via a system management bus (system management bus, SMBUS). In an embodiment, the EC 301 is connected to the CPU 307 via a general-purpose input/output (general purpose input/output, GPIO) port, and may alternatively be connected to the CPU 307 via a platform environment control interface (platform environment control interface, PECI) port.

The charging chip 302 is connected to the EC 301. In an embodiment, the charging chip 302 is connected to the EC 301 via the system management bus (system management bus, SMBUS). In an embodiment, the charging chip 302 may also be referred to as a charger chip or a charger IC. The charging chip 302 may also include a photo-diode (Photo-Diode, PD) chip. The PD chip is used for the EC 301 to obtain power of an external power supply, and adjusts a charging voltage and current from the external power supply according to a charging policy, to implement that the external power supply charges the battery 303, or supplies power for the EC 301 and the CPU 307. In an embodiment, the terminal device 300 may be connected to a power adapter via the charging chip 302, so that the terminal is enabled to be connected to the external power supply.

The battery 303 is configured to supply power for the EC 301 and the CPU 307.

The lid 304 is configured to prevent dust and prevent a keyboard from being hit, and may also be configured to enable the terminal device to be in a sleep, sleep, or power-off state. For example, a lid of a flip phone and a computer lid.

It should be noted that on a PC or a notebook computer, the lid 304 and the display 308 are usually integrated together. For example, when the PC or the notebook computer is in a power-on state, if the lid is closed, the display turns off and the PC or notebook computer enters the sleep state. If the lid is open, the display lights up and the PC or notebook computer exits the sleep state.

The power button 305 is configured to control an on/off key of a power supply, that is, to turn off or turn on the terminal device.

The ROM 306, for example, may be a BIOS ROM. The ROM 306 may be separately connected to the EC 301 and the CPU 307.

The CPU 307 may include one or more processing units. Different processing units may be separate components, or may be integrated into one or more processors. A memory configured to store instructions and data may be further disposed in the CPU 307.

The display 308 may be separately connected to the EC 301 and the CPU 307. The display 308 may be a liquid crystal display (liquid crystal display, LCD), but this is not limited in embodiments of this application. The display 308 is configured to display an image, a video, and the like. The display 308 may include a display panel.

In an embodiment, the terminal device 300 may further include a first sensor and a second sensor. The first sensor may be connected to the EC 302, and the second sensor may be connected to the CPU 307. The first sensor may include but is not limited to a temperature sensor. The second sensor may include but is not limited to a pressure sensor, a gyro sensor, an acceleration sensor, and the like. The second sensor is not described in embodiments of this application again.

In an embodiment, the terminal device 300 may further include a first memory and a second memory. The first memory is connected to the EC 301, and the second memory is connected to the CPU 307.

In an embodiment, the first memory may include a flash (flash) memory. In an embodiment, the first memory may be disposed and independent of the EC 301, and is connected to the EC 301. In an embodiment, the first memory is disposed in the EC 301. A disposing manner of the first memory is not limited in embodiments of this application.

The first memory is configured to store one or more computer programs, to enable the EC to implement the operations of the EC in embodiments of this application based on the one or more computer programs.

The second memory may be configured to store one or more computer programs, and the one or more computer programs include instructions. The second memory may include a program storage area and a data storage area. The program storage area may store an operating system. The program storage area may further store one or more applications (such as gallery and contacts) and the like. The data storage area may store data created when an electronic device is used. In addition, the second memory may include a high-speed random access memory, and may also include a non-volatile memory, for example, at least one magnetic disk storage device, a flash memory, and a universal flash storage (universal flash storage, UFS). In an embodiment, the second memory may be a solid-state disk (Solid State Disk, SSD). The SSD is configured to store a new version of BIOS. It should be understood that the SSD is not shown in FIG. 3.

The first memory and the second memory may be represented by the memory in embodiments of this application, and the memory is not shown in FIG. 3.

FIG. 4 is a block diagram of a software structure of a terminal device applicable to an embodiment of this application. A software system of the terminal device may use a layered architecture. In embodiments of this application, a PC system architecture of the terminal device (such as a PC) is used as an example to describe the software structure of the terminal device. In the layered architecture, the software system of the terminal device is divided into several layers, each layer has a clear role and task, and the layers communicate with each other via a software interface.

In an embodiment, a PC system may be divided into four layers, namely, an application (applications) layer, a system layer, a driver layer, and a hardware layer. Layering of the software structure of the terminal device is not limited in embodiments of this application. Modules included in layers in the following embodiments are modules included in embodiments of this application. The modules included in the following layers do not constitute a limitation on a structure of the terminal device. For example, an upgrade state recording module may be deployed in a PC manager APP at the application layer or in a Windows service at the system layer. That the upgrade state recording module is deployed at the system layer is introduced below. In an embodiment, modules shown in FIG. 4 may be deployed separately, or several modules may be deployed together, and division of the modules in FIG. 4 is an example. In an embodiment, names of the modules shown in FIG. 4 are examples for description.

The application layer may include an application package. For example, the application layer may include the application package, such as camera, gallery, calendar, call, map, navigation, Bluetooth, music, video, and message.

In FIG. 4, an example in which the application layer includes the PC manager application (application, APP) is used for description. The PC manager APP is for downloading a new version of BIOS from an over the air technology (over the air technology, OTA) server and transmit the new version of BIOS to an OTA upgrade service module at the system layer. In an embodiment, the new version of BIOS may be an image file or an executable file. A file form of the new version of BIOS is not limited in embodiments of this application. The PC manager APP may further receive a long press event of a power button of the upgrade state recording module from the system layer and an upgrade state during the upgrade.

In an embodiment, refer to FIG. 4. The system layer may include: the upgrade state recording module and the OTA upgrade service module. The upgrade state recording module is configured to transmit the long press event of the power button and the upgrade state during the upgrade to the PC manager APP. The upgrade state recording module is further configured to perform data exchange with a windows management interface (windows management interface, WMI) module at the driver layer. The OTA upgrade service module is configured to transmit the new version of BIOS (the image file) from the PC Manager APP, verify the new version of BIOS, and save the BIOS that is successfully verified for subsequent upgrade.

The driver layer includes at least a hardware driver for driving the hardware to work. For example, the driver layer includes: a sensor driver, a display driver (display driver), a graphics processing unit driver (graphics processing unit driver, GPU driver), and the like. This is not limited in embodiments of this application. For example, the display driver is configured to drive a display of the hardware layer to work, to display an interface of the terminal. It should be understood that driver modules for each hardware are not shown in FIC. 4.

In an embodiment, the driver layer may further include: the windows management interface (windows management interface, WMI) module and an upgrade module. The WMI module is configured to implement data exchange between an EC and the upgrade state recording module. The upgrade module is configured to write the new version of BIOS to a BIOS ROM to implement BIOS upgrade.

The hardware layer includes hardware devices, such as the EC, the display, a central processing unit (central processing unit, CPU), a battery, a charging chip, a lid, a power button, and the BIOS ROM, as shown in the hardware structure of the terminal shown in FIG. 3. This is not described herein again. It should be understood that the hardware layer in FIG. 4 shows the EC, the battery, the charging chip, the lid, the power button, and the BIOS ROM included in embodiments of this application.

The EC may include an obtaining unit and a control unit. The obtaining unit may be configured to detect the battery to obtain battery power, may be further configured to test the charging chip to determine whether a power adapter is connected, may be further configured to detect the lid to obtain an open and closed state of the lid, and may be further configured to detect the power button to detect whether the power button is pressed (or pressed).

The control unit may be configured to record the long press event of the power button, may be further configured to record the upgrade state during the upgrade, may be further configured to suspend or recover the upgrade state during the upgrade, and may be further configured to notify a user that the power button is pressed.

It may be understood that the structures shown in FIG. 3 and FIG. 4 do not constitute a specific limitation on the terminal. In some other embodiments of this application, the terminal may include more or fewer components than those shown in the figure, or some components may be combined, or some components may be split, or different component arrangements may be used. The components shown in the figure may be implemented by hardware, software, or a combination thereof.

To clearly describe the technical solutions in embodiments of this application, terms such as "first" and "second" are used in embodiments of this application to distinguish between same items or similar items that have basically the same functions and purposes. A person skilled in the art may understand that the terms such as "first", "second" do not limit a quantity and an execution order, and the terms such as "first", "second" are not limited to be necessarily different.

It should be noted that in this application, the terms such as "example" or "for example" are used to represent giving an example, an illustration, or a description. Any embodiment or design scheme described as an "example" or "for example" in this application should not be explained as being more preferable or having more advantages than another embodiment or design scheme. Exactly, use of the terms such as "example" or "for example" is intended to present a related concept in a specific manner.

In addition, "at least one" means one or more and "a plurality of" means two or more. The term "and/or" describes an association relationship for describing associated objects and represents that three relationships may exist. For example, A and/or B may represent: only A exists, both A and B exist, and only B exists, where A and B may be singular or plural. The character "/" generally represents that the associated object is in an "or" relationship. "At least one of the following items (pieces)" or similar expressions refer to any combination of these items, including any combination of singular item (piece) or plural items (pieces). For example, at least one of a, b, and c may represent: a, or b, or c, or a and b, or a and c, or b and c, or a, b, and c, where a, b, and c may be one or more.

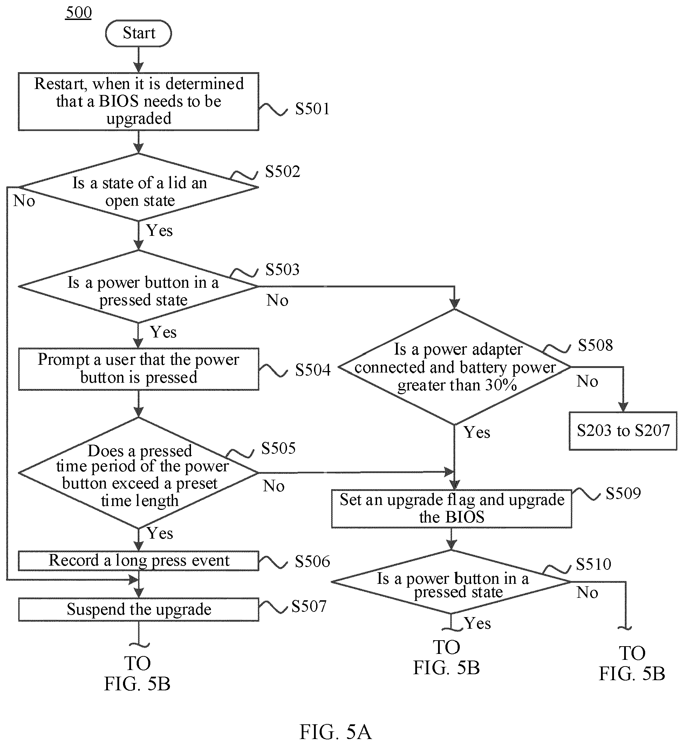

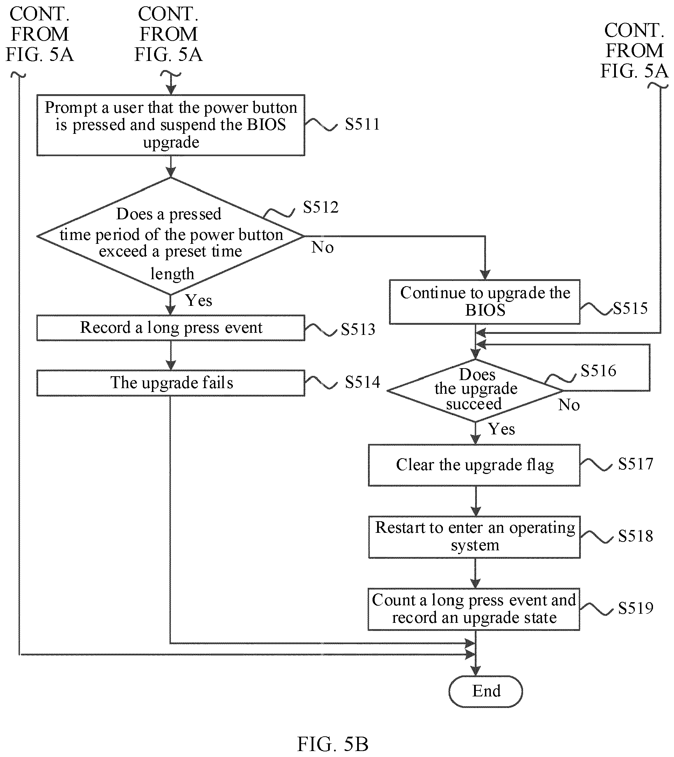

FIG. 5A and FIG. 5B are a schematic flowchart of a basic input output system BIOS-based upgrade method 500. The method 500 may be performed by a terminal device, for example, the foregoing PC. The diagram of the hardware structure of the terminal device may be shown in FIG. 3, and the block diagram of the software structure of the terminal device may be shown in FIG. 4, but this is not limited in embodiments of this application.

As shown in FIG. 5A and FIG. 5B, the method 500 may include the following steps.

S501. Restart, when it is determined that a BIOS needs to be upgraded.

For a specific implementation of this step, refer to the foregoing S201. This is not described herein again.

S502. Determine whether a state of a lid is an open state.

The terminal device determines whether the state of the lid is the open state, for example, a PC determines whether a lid of the PC is in the open state.

If the state of the lid is the open state, S503 is performed. If the state of the lid is a closed state, S507 is performed. In other words, the upgrade is suspended.

Before the BIOS is upgraded, the state of the lid is determined. When the state of the lid is the closed state, the upgrade is suspended, to avoid overheating due to the upgrade and reduce a probability of an upgrade failure.

S503. Determine whether a power button is in a pressed state if the state of the lid is the open state. If the state of the lid is the open state, the terminal device determines whether the power (power) button is pressed by a user, that is, determines whether the power button is in the pressed state. If the power button is in the pressed state, the terminal device performs S504. If the power button is not in the pressed state, the terminal device performs S508.

S504. Prompt a user that the power button is pressed if the power button is in the pressed state.

When the terminal device detects an operation of pressing the power button by the user, prompt information may be displayed on an interface to prompt the user that the power button is pressed. There may be a plurality of possible implementations for disappearance of the prompt information. In a possible implementation, the prompt information may disappear when the terminal device detects that the power button is not in the pressed state.

In another possible implementation, when the terminal device displays the prompt information, a close option may be displayed. When the terminal device detects an operation of clicking the close option by the user, the prompt information disappears.

S505. Detect whether a pressed time period of the power button exceeds a preset time length.

For a specific implementation of this step, refer to the foregoing S209. This is not described herein again.

If the pressed time period of the power button exceeds the preset time length, the terminal device performs S506. If the pressed time period of the power button does not exceed the preset time length, the terminal device performs S509.

S506. Record a long press event if the pressed time period of the power button exceeds the preset time length.

The terminal device records the long press event of the power button. For example, the terminal device may record a time period of the long press event.

S507. Suspend the upgrade.

Suspending the upgrade means stopping the upgrade temporarily. If the pressed time period of the power button exceeds the preset time length, the terminal device may power off. When the terminal device detects a power-on operation of the user, the terminal device is restarted and continues to perform S502.

If the user long presses the power button, it indicates that the user does not want to upgrade, and the terminal device may suspend the upgrade to prevent the terminal device from being abnormal due to an upgrade failure.

In this implementation, before the BIOS is upgraded, whether the state of the lid and the state of the power button satisfy conditions is first determined. When the conditions are not satisfied, the upgrade is suspended. This avoids the failure caused during the upgrade and improves a BIOS upgrade rate.

Optionally, the terminal device may periodically prompt the user whether to upgrade the BIOS. Alternatively, when the terminal device detects the power-on operation of the user, the BIOS is upgraded during restarting.

S508. Detect whether a power adapter is connected and whether battery power is greater than 30% if the power button is not in the pressed state.

If the power button is not in the pressed state, the terminal device detects whether the conditions of the BIOS upgrade are satisfied. For a specific implementation, refer to the foregoing S202. This is not described herein again.

If the terminal device is connected to the power adapter and it is detected that the battery power is greater than 30%, the terminal device performs S509. If the terminal device is not connected to the power adapter and/or it is detected that the battery power is less than or equal to 30%, the terminal device may perform S203 to S207.

S509. Set an upgrade flag and upgrade the BIOS if the power adapter is connected and it is detected that the battery power is greater than 30%.

For a specific implementation of this step, refer to the foregoing S208. This is not described herein again.

S510. Determine whether a power button is in a pressed state.

For a specific implementation of this step, refer to the foregoing S503. This is not described herein again.

If the power button is in the pressed state, the terminal device performs S510. If the power button is not in the pressed state, the terminal device performs S516. S511. Prompt a user that the power button is pressed and suspend the BIOS upgrade if the power button is in the pressed state.

The power button is pressed, probably because the user touches the power button by mistake. The terminal device may suspend the BIOS upgrade to reduce a risk of the upgrade failure.

S512. Detect whether a pressed time period of the power button exceeds a preset time length.

For a specific implementation of this step, refer to the foregoing S505. This is not described herein again.

If the pressed time period of the power button exceeds the preset time length, the terminal device performs S513. If the pressed time period of the power button does not exceed the preset time length, the terminal device performs S515.

S513. Record a long press event if the pressed time period of the power button exceeds the preset time length.

For a specific implementation of this step, refer to the foregoing S506. This is not described herein again.

S514. The upgrade fails.

If the pressed time period of the power button exceeds the preset time length, it indicates that the user wants to power off, and the upgrade fails.

In this implementation, during the upgrade of the BIOS, if it is detected that the power button is pressed, the BIOS upgrade is stopped. If the pressed time period of the power button exceeds the preset time length, the upgrade fails. In this case, the BIOS upgrade is suspended and the power-off of the terminal device has little impact on the terminal device. When the terminal device detects the power-on operation of the user, the terminal device may upgrade normally. This avoids the failure caused during the upgrade and improves a BIOS upgrade rate.

Optionally, the terminal device may periodically prompt the user whether to upgrade the BIOS. Alternatively, when the terminal device detects the power-on operation of the user, the BIOS is upgraded during restarting.

S515. Continue to upgrade the BIOS if the pressed time period of the power button does not exceed the preset time length.

S516. Determine whether the upgrade succeeds.

For a specific implementation of this step, refer to the foregoing S210. This is not described herein again.

S517. Clear the upgrade flag if the upgrade succeeds.

For a specific implementation of this step, refer to the foregoing S211. This is not described herein again.

S518. Restart to enter an operating system.

S519. Count a long press event during the upgrade and record an upgrade state during the upgrade. The terminal device may count information such as a quantity of times and a time period of the long press event during the upgrade, but this is not limited in embodiments of this application.

The upgrade state may be that the upgrade succeeds or fails. This is not limited in embodiments of this application.

After the upgrade succeeds, the terminal device may count the long press event generated during the upgrade and record the upgrade state during the upgrade. For example, the terminal device has experienced three long press events and two upgrade failures before the upgrade succeeds.

Optionally, the terminal device may further record a cause for the successful or failed upgrade, for subsequently summarizing the cause and providing a more reasonable upgrade method, to improve a BIOS upgrade success rate.

In the BIOS-based upgrade method provided in embodiments of this application, before the BIOS upgrade, whether the state of the lid and the state of the power button satisfy the conditions is first determined. When the conditions are satisfied, the upgrade is performed. When the conditions are not satisfied, the upgrade is suspended. The upgrade may be performed in an optimal condition to facilitate improving the BIOS upgrade rate. In addition, in the method, during the BIOS upgrade, if it is detected that the power button is pressed, the BIOS upgrade is stopped. If the pressed time period of the power button exceeds the preset time length, although the upgrade fails, the BIOS upgrade is suspended, and the upgrade failure has little impact. If the power-on operation of the user is detected, the upgrade may be normally performed. This facilitates protecting the terminal device. In addition, in the method, after the upgrade, the long press event and the upgrade state during the upgrade are counted, facilitating analysis and summary and facilitating subsequently improving the upgrade method.

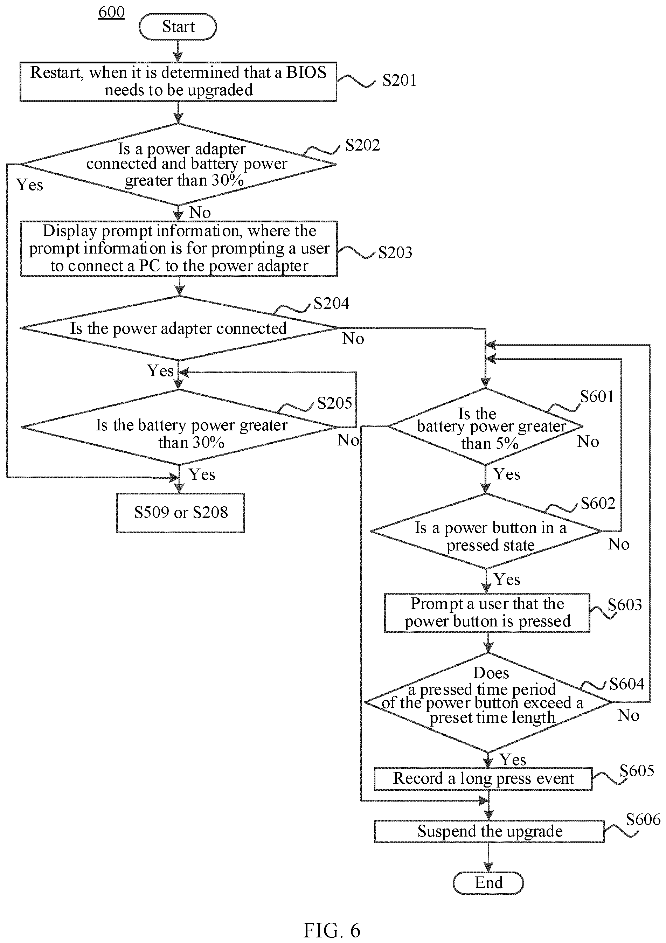

FIG. 6 is a schematic flowchart of a BIOS-based upgrade method 600. The method 600 may be performed by a terminal device, for example, the foregoing PC. The diagram of the hardware structure of the terminal device may be shown in FIG. 3, and the block diagram of the software structure of the terminal device may be shown in FIG. 4, but this is not limited in embodiments of this application.

As shown in FIG. 6, the method 600 may include the following steps.

The terminal device may perform S201 to S205. If the battery power is greater than 30%, the terminal device may perform S208 or perform S509. This is not limited in embodiments of this application.

Optionally, after the terminal device performs S201 and before performing S202, the terminal device may perform S502 to S507 in the foregoing method 500.

If in S204, the terminal device detects that the power adapter is not connected, S601 may be performed.

S601. Detect whether the battery power is greater than 5%.

If the battery power is greater than 5%, the terminal device may perform S602. If the battery power is less than or equal to 5%, the terminal device may perform S606.

It should be noted that 5% is only an example. This is not limited in embodiments of this application. 5% may be replaced with any value less than 30% and greater than 0%.

S602. Determine whether a power button is in a pressed state.

If the power button is in the pressed state, the terminal device may perform S603. If the power button is not in the pressed state, the terminal device may perform S601, that is, continue to detect whether the battery power is greater than 5%.

S603. Prompt a user that the power button is pressed if the power button is in the pressed state.

For a specific implementation of this step, refer to the foregoing S504. This is not described herein again.

S604. Detect whether a pressed time period of the power button exceeds a preset time length.

For a specific implementation of this step, refer to the foregoing S505. This is not described herein again.

If the pressed time period of the power button exceeds the preset time length, the terminal device may perform S605. If the pressed time period of the power button does not exceed the preset time length, the terminal device may perform S601, that is, continue to detect whether the battery power is greater than 5%.

S605. Record a long press event if the pressed time period of the power button exceeds the preset time length.

For a specific implementation of this step, refer to the foregoing S506. This is not described herein again.

S606. Suspend the upgrade.

If the user long presses the power button, it indicates that the user does not want to upgrade, and the terminal device may suspend the upgrade to prevent the terminal device from being abnormal due to an upgrade failure.

In the BIOS-based upgrade method provided in embodiments of this application, when it is detected that the power adapter is not connected, and the battery power is less than or equal to 5%, the BIOS upgrade may be automatically suspended, to avoid an upgrade failure due to insufficient battery power and reduce an upgrade failure rate. In addition, if the battery power is greater than 5% but it is detected that the pressed time period of the power button exceeds the preset time length, the long press event is recorded and the BIOS upgrade is automatically suspended, to avoid an upgrade failure due to long press of the power button and reduce the upgrade failure rate.

Sequence numbers of the foregoing processes do not mean execution sequences. The execution sequences of the processes should be determined according to functions and internal logic of the processes, and should not be construed as any limitation on the implementation processes of embodiments of this application.

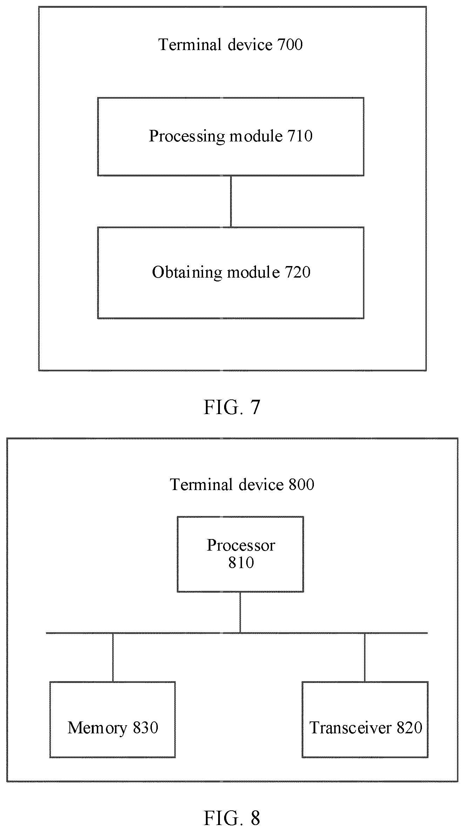

With reference to FIG. 1 to FIG. 6, the foregoing describes the method provided in embodiments of this application in detail. With reference to FIG. 7 and FIG. 8, the following describes a device provided in embodiments of this application in detail.

FIG. 7 is a schematic block diagram of a terminal device 700 according to an embodiment of this application. The device 700 includes: a processing module 710 and an obtaining module 720. The processing module 710 is configured to download a target BIOS version of a terminal device from a server; and restart the terminal device. The obtaining module 720 is configured to obtain a state of a power button of the terminal device during power-on of the terminal device. The processing module 710 module is further configured to suspend upgrade if the power button is in a pressed state and a pressed time period exceeds a preset time length; or upgrade the terminal device based on the target BIOS version if the power button is not in a pressed state or a pressed time period of the power button does not exceed a preset time length.

Optionally, the processing module 710 module is further configured to detect whether the terminal device is connected to a power adapter if the power button is not in the pressed state; or upgrade the terminal device based on the target BIOS version if the terminal device is connected to the power adapter and battery power in the terminal device satisfies a first condition.

Optionally, the terminal device further includes a display module. The display module is further configured to display prompt information if the power button is in the pressed state, where the prompt information is for prompting a user that the power button is in the pressed state.

Optionally, the terminal device includes a lid. The obtaining module 720 is further configured to obtain a state of the lid during the power-on of the terminal device. The processing module 710 module is further configured to suspend the upgrade if the lid is in a closed state. The obtaining module 720 is further configured to obtain the state of the power button if the lid is in an open state.

Optionally, the obtaining module 720 is further configured to obtain, if the pressed time period of the power button does not exceed the preset time length, the terminal device is connected to the power adapter, and the battery power in the terminal device satisfies the first condition, the state of the power button. The processing module 710 module is further configured to suspend the upgrade if the power button is in the pressed state; or upgrade the terminal device based on the target BIOS version if the power button is in the pressed state and the pressed time period does not exceed the preset time length.

Optionally, the first condition is that the battery power is greater than preset power.

Optionally, the processing module 710 module is further configured to suspend the upgrade if the terminal device is not connected to the power adapter and the battery power in the terminal device does not satisfy a second condition, where the first condition is different from the second condition. Optionally, the obtaining module 720 is further configured to obtain the state of the power button if the terminal device is not connected to the power adapter and the battery power in the terminal device satisfies the second condition. The processing module 710 module is further configured to continue to detect, if the power button is not in the pressed state or the pressed time period of the power button does not exceed the preset time length, whether the battery power in the terminal device satisfies the second condition; or suspend the upgrade if the pressed time period of the power button exceeds the preset time length.

Optionally, the processing module 710 module is further configured to record a long press event and an upgrade state if the power button is in the pressed state and the pressed time period exceeds the preset time length.

Optionally, the processing module 710 module is further configured to count the long press event and the upgrade state to analyze a cause for an upgrade failure.

It should be understood that the terminal device 700 is represented in a form of a functional module. The term "module" may be an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions. In an optional example, a person skilled in the art may understand that the terminal device 700 may be specifically the terminal device in the foregoing method embodiments, or that the functions of the terminal device in the foregoing method embodiments may be integrated in the terminal device 700. The terminal device 700 may be configured to perform various procedures and/or steps corresponding to the terminal device in the foregoing method embodiments. To avoid repetitions, this is not described herein again.

The terminal device 700 has a function of implementing the corresponding steps performed by the terminal device in the foregoing method embodiments. The function may be implemented by hardware, or may be implemented by hardware executing corresponding software. The hardware or software includes one or more modules corresponding to the foregoing function.

In embodiments of this application, the terminal device 700 in FIG. 7 may alternatively be a chip or a chip system, for example: a system on chip (system on chip, SoC).

FIG. 8 is a schematic block diagram of another terminal device 800 according to an embodiment of this application. The terminal device 800 includes a processor 810, a communication interface 820, and a memory 830. The processor 810, the communication interface 820, and the memory 830 communicate with each other via an internal connection path. The memory 830 is configured to store instructions, and the processor 820 is configured to execute the instructions stored in the memory 830, to control the communication interface 820 to send and/or receive a signal.

It should be understood that the terminal device 800 may be specifically the terminal device in the foregoing method embodiments, or that the functions of the terminal device in the foregoing method embodiments may be integrated in the terminal device 800. The terminal device 800 may be configured to perform various steps and/or procedures corresponding to the terminal device in the foregoing method embodiments. Optionally, the memory 830 may include a read-only memory and a random access memory, and provide instructions and data for the processor. A part of the memory may further include a non-volatile random access memory. For example, the processor may further store information about a device type. The processor 810 may be configured to execute the instructions stored in the memory, and when the processor executes the instructions, the processor may perform various steps and/or procedures corresponding to the terminal device in the foregoing method embodiments.

It should be understood that, in embodiments of this application, the processor 810 may be a central processing unit (central processing unit, CPU), or the processor may be another general-purpose processor, digital signal processor (DSP), application-specific integrated circuit (ASIC), field-programmable gate array (FPGA) or another programmable logic device, discrete gate or transistor logic device, discrete hardware component, or the like. The general-purpose processor may be a microprocessor, or the processor may be any conventional processor, or the like.

During implementation, the steps of the foregoing method may be completed by using an integrated logic circuit of hardware in the processor or an instruction in a form of software. The steps of the method disclosed with reference to embodiments of this application may be directly implemented by a hardware processor, or may be implemented by a combination of hardware and software modules in the processor. The software module may be located in a storage medium that is mature in the art, such as a random access memory, a flash memory, a read-only memory, a programmable read-only memory, an electrically erasable programmable memory, or a register. The storage medium is located in the memory. The processor executes the instructions in the memory and completes the steps of the method in combination with hardware thereof. To avoid repetitions, details are not described herein again.

This application further provides a computer-readable storage medium. The computer-readable medium is configured to store a computer program. The computer program is for implementing the method corresponding to the terminal device in the foregoing method embodiments.

This application further provides a chip system. The chip system is used for supporting the terminal device in the foregoing method embodiments to achieve the functions shown in embodiments of this application.

This application further provides a computer program product. The computer program product includes a computer program (which may also be referred to as code, or instructions). When the computer program runs on a computer, the computer may be enabled to perform the method corresponding to the terminal device shown in the foregoing method embodiments.

A person of ordinary skill in the art may understand that modules and algorithm steps in the examples described with reference to embodiments disclosed in this specification can be implemented by electronic hardware or a combination of computer software and electronic hardware. Whether the functions are executed in a manner of hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the system, apparatus, and module described above, refer to a corresponding process in the foregoing method embodiments, and this is not described herein again.

In the several embodiments provided in this application, it should be understood that the disclosed system, apparatus, and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one place, or may be distributed on a plurality of network modules. Some or all of the modules may be selected according to actual needs to achieve the objectives of the solutions of this embodiment.

**In** addition, functional modules in embodiments of this application may be integrated in one processing module, or each of the modules may exist alone physically, or two or more modules may be integrated in one module.

When the functions are implemented in a form of a software functional module and sold or used as an independent product, the functions may be stored in a computer-readable storage medium. Based on such understanding, the technical solutions of this application essentially, or the part contributing to the conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, an optical disc.

The foregoing descriptions are merely specific implementations of this application, and are not intended to limit the protection scope of embodiments of this application. Any variation or replacement figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A basic input output system-based upgrade method, comprising:
downloading a target BIOS version of a terminal device from a server, wherein the terminal device comprises a lid;
restarting (S501) the terminal device;
obtaining (S502) a state of the lid during power-on of the terminal device;
if the state of the lid is an open state, obtaining (S503) a state of a power button of the terminal device during the power-on of the terminal device;
if the power button is in a pressed state, detecting (S505) whether a pressed time period exceeds a preset time length; and suspending (S507) upgrade if the lid is in a closed state; or if the power button is in the pressed state and the pressed time period exceeds the preset time length;
if the power button is not in a pressed state, detecting (S508) whether the terminal device is connected to a power adapter and battery power in the terminal device is greater than 30%; and
setting (S509) an upgrade flag and upgrading the terminal device based on the target BIOS version if the battery power is greater than 30%; or if the pressed time period of the power button does not exceed the preset time length;
obtaining (S510) a state of the power button again during upgrading the terminal device;
if the power button is in a pressed state, detecting (S521) whether a pressed time period exceeds a preset time length; and upgrading the terminal device continue (S515) until the upgrade succeeds if the power button is not in the pressed state or the pressed time period of the power button does not exceed the preset time length; and clearing (S517) the upgrade flag if the upgrade succeeds; or upgrading failed (S514) if the power button is in the pressed state and the pressed time period exceeds the preset time length.

2. The method according to claim 1, wherein the method further comprises:
after obtaining (S510) the state of the power button again during upgrading the terminal device; displaying (S511) prompt information if the power button is in the pressed state, wherein the prompt information is for prompting a user that the power button is in the pressed state.

3. The method according to any one of claims 1 or 2, wherein the method further comprises:
suspending (S606) the upgrade if the terminal device is not connected to the power adapter and the battery power in the terminal device is not greater than 5%;.

4. The method according to claim 3, wherein the method further comprises:
obtaining (S602) the state of the power button if the terminal device is not connected to the power adapter and the battery power in the terminal device is greater than 5%;
if the power button is not in the pressed state or the pressed time period of the power button does not exceed the preset time length, continuing to detect whether the battery power in the terminal device is greater than 5%; or
suspending (S606) the upgrade if the power button is in the pressed state and the pressed time period exceeds the preset time length.

5. The method according to any one of claims 1 to 4, wherein the method further comprises:
recording (S513) a long press event and an upgrade state if the power button is in the pressed state and the pressed time period exceeds the preset time length.

6. The method according to claim 5, wherein after the upgrading (S509) the terminal device based on the target BIOS version if the battery power is greater than 30%; or if the pressed time period of the power button does not exceed the preset time length, the method further comprises:
counting (S519) the long press event and the upgrade state to analyze a cause for an upgrade failure.

7. An electronic device, comprising: a processor and a memory, wherein
the memory stores computer instructions; and
the processor executes the computer instructions stored in the memory,
and when the electronic device executes the computer instructions, the electronic device performs the method of any one of claims 1 to 6.

8. A computer-readable storage medium, wherein the computer-readable storage medium stores a computer program or instructions, and when the computer program or instructions are run on an electronic device, the method according to any one of claims 1 to 6 is performed.

9. A computer program product, comprising instructions which, when the program is executed by an electronic device, cause the electronic device to carry out the method according to any one of claims 1 to 6.

## Patentansprüche

1. Ein Upgrade-Verfahren basierend auf einem Basic Input Output System, umfassend:
Herunterladen einer Ziel-BIOS-Version eines Endgeräts von einem Server, wobei das Endgerät einen Deckel umfasst;
Neustarten (S501) des Endgeräts;
Abrufen (S502) eines Zustands des Deckels während des Einschaltens des Endgeräts;
Wenn der Zustand des Deckels ein offener Zustand ist, Abrufen (S503) eines Zustands eines Netzschalters des Endgeräts während des Einschaltens des Endgeräts;
Wenn der Netzschalter gedrückt ist, Erkennung (S505), ob eine gedrückte Zeitdauer eine voreingestellte Zeitlänge übersteigt; und Aussetzen (S507) des Upgrades, wenn der Deckel geschlossen ist; oder wenn der Netzschalter gedrückt ist und die gedrückte Zeitdauer die voreingestellte Zeitlänge übersteigt;
Wenn der Netzschalter nicht gedrückt ist, Erkennung (S508), ob das Endgerät mit einem Netzadapter verbunden ist und die Akkuleistung im Endgerät größer als 30 % ist; und
Setzen (S509) eines Upgrade-Flags und Upgraden des Endgeräts basierend auf der Ziel-BIOS-Version, wenn die Akkuleistung größer als 30 % ist; oder wenn die gedrückte Zeitdauer des Netzschalters die voreingestellte Zeitlänge nicht übersteigt;
Erneutes Abrufen (S510) eines Zustands des Netzschalters während des Upgrades des Endgeräts;
Wenn der Netzschalter gedrückt ist, Erkennung (S521), ob eine gedrückte Zeitdauer eine voreingestellte Zeitlänge übersteigt; und Fortsetzen des Upgrades des Endgeräts (S515), bis das Upgrade erfolgreich ist, wenn der Netzschalter nicht gedrückt ist oder die gedrückte Zeitdauer des Netzschalters die voreingestellte Zeitlänge nicht übersteigt; und Löschen (S517) des Upgrade-Flags, wenn das Upgrade erfolgreich ist; oder Fehlschlagen des Upgrades (S514), wenn der Netzschalter gedrückt ist und die gedrückte Zeitdauer die voreingestellte Zeitlänge übersteigt.

2. Verfahren nach Anspruch 1, wobei das Verfahren ferner umfasst:
Nach dem erneuten Abrufen (S510) des Zustands des Netzschalters während des Upgrades des Endgeräts; Anzeigen (S511) von Hinweisinformationen, wenn der Netzschalter gedrückt ist, wobei die Hinweisinformation dazu dient, den Benutzer darauf hinzuweisen, dass der Netzschalter gedrückt ist.

3. Verfahren nach einem der Ansprüche 1 oder 2, wobei das Verfahren ferner umfasst:
Aussetzen (S606) des Upgrades, wenn das Endgerät nicht mit dem Netzadapter verbunden ist und die Akkuleistung im Endgerät nicht mehr als 5 % beträgt.

4. Verfahren nach Anspruch 3, wobei das Verfahren ferner umfasst:
Abrufen (S602) des Zustands der Einschalttaste, wenn das Endgerät nicht mit dem Netzadapter verbunden ist und die Akkuleistung im Endgerät größer als 5 % ist;
Wenn sich die Einschalttaste nicht im gedrückten Zustand befindet oder der Zeitraum, in dem die Einschalttaste gedrückt wurde, die voreingestellte Zeitdauer nicht überschreitet, wird weiterhin überprüft, ob die Akkuleistung im Endgerät größer als 5 % ist; oder
Aussetzen (S606) des Upgrades, wenn sich die Einschalttaste im gedrückten Zustand befindet und der Zeitraum, in dem sie gedrückt wurde, die voreingestellte Zeitdauer überschreitet.

5. Verfahren gemäß einem der Ansprüche 1 bis 4, wobei das Verfahren ferner aufweist:
Protokollieren (S513) eines Langdruck-Ereignisses und eines Upgrade-Status, wenn sich die Einschalttaste im gedrückten Zustand befindet und der Zeitraum, in dem sie gedrückt wurde, die voreingestellte Zeitdauer überschreitet.

6. Verfahren gemäß Anspruch 5, wobei nach dem Upgrade (S509) des Endgeräts basierend auf der Ziel-BIOS-Version, sofern die Akkuleistung größer als 30 % ist; oder wenn der Zeitraum, in dem die Einschalttaste gedrückt wurde, die voreingestellte Zeitdauer nicht überschreitet, das Verfahren ferner umfasst:
Zählen (S519) des Langdruck-Ereignisses und des Upgrade-Status, um eine Ursache für einen Upgrade-Fehler zu analysieren.

7. Elektronisches Gerät, umfassend: einen Prozessor und einen Speicher, wobei
der Speicher Computerbefehle speichert; und
der Prozessor die im Speicher gespeicherten Computerbefehle ausführt,
und wenn das elektronische Gerät die Computerbefehle ausführt, führt das elektronische Gerät das Verfahren nach einem der Ansprüche 1 bis 6 durch.

8. Computerlesbares Speichermedium, wobei das computerlesbare Speichermedium ein Computerprogramm oder Anweisungen speichert und, wenn das Computerprogramm oder die Anweisungen auf einem elektronischen Gerät ausgeführt werden, das Verfahren gemäß einem der Ansprüche 1 bis 6 durchgeführt wird.

9. Computerprogrammprodukt, umfassend Anweisungen, die, wenn das Programm von einem elektronischen Gerät ausgeführt wird, dazu führen, dass das elektronische Gerät das Verfahren gemäß einem der Ansprüche 1 bis 6 durchführt.

## Revendications

1. Une méthode de mise à niveau basée sur un système d'entrée-sortie de base, comprenant :
télécharger une version cible du BIOS d'un terminal depuis un serveur, le terminal comprenant un couvercle ;
redémarrer (S501) le terminal ;
obtenir (S502) un état du couvercle lors de la mise sous tension du terminal ;
si l'état du couvercle est ouvert, obtenir (S503) l'état du bouton d'alimentation du terminal lors de sa mise sous tension ;
si le bouton d'alimentation est enfoncé, détecter (S505) si la période d'enfoncement dépasse une durée prédéfinie ; et suspendre (S507) la mise à niveau si le couvercle est fermé ; ou si le bouton d'alimentation est enfoncé et que la période d'enfoncement dépasse la durée prédéfinie ;
si le bouton d'alimentation n'est pas enfoncé, détecter (S508) si le terminal est connecté à un adaptateur secteur et que la batterie du terminal est supérieure à 30 % ; et
définir (S509) un indicateur de mise à niveau et mettre à niveau le terminal à partir de la version cible du BIOS si la batterie est supérieure à 30 % ; ou si la période d'enfoncement du bouton d'alimentation ne dépasse pas la durée prédéfinie ;
obtenir (S510) à nouveau l'état du bouton d'alimentation lors de la mise à niveau du terminal ;
si le bouton d'alimentation est enfoncé, détecter (S521) si la période d'enfoncement dépasse une durée prédéfinie ; et continuer la mise à niveau du terminal (S515) jusqu'à ce qu'elle réussisse si le bouton d'alimentation n'est pas enfoncé ou si la période d'enfoncement ne dépasse pas la durée prédéfinie ; et effacer (S517) l'indicateur de mise à niveau si la mise à niveau réussit ; ou considérer la mise à niveau comme échouée (S514) si le bouton d'alimentation est enfoncé et la durée dépasse la période prédéfinie.

2. Procédé selon la revendication 1, ledit procédé comprenant en outre :
après avoir obtenu (S510) l'état du bouton d'alimentation à nouveau lors de la mise à niveau du terminal ; afficher (S511) une information d'invite si le bouton d'alimentation est enfoncé, ladite information d'invite étant destinée à indiquer à l'utilisateur que le bouton d'alimentation est enfoncé.

3. Procédé selon l'une quelconque des revendications 1 ou 2, ledit procédé comprenant en outre :
suspendre (S606) la mise à niveau si le terminal n'est pas connecté à l'adaptateur secteur et que la batterie du terminal n'est pas supérieure à 5 %.

4. Procédé selon la revendication 3, ledit procédé comprenant en outre :
obtention (S602) de l'état du bouton d'alimentation si le dispositif terminal n'est pas connecté à l'adaptateur secteur et que l'alimentation de la batterie du dispositif terminal est supérieure à 5 % ;
si le bouton d'alimentation n'est pas enfoncé ou si la durée d'appui du bouton d'alimentation n'excède pas la durée prédéfinie, poursuivre la détection pour savoir si l'alimentation de la batterie du dispositif terminal est supérieure à 5 % ; ou
suspension (S606) de la mise à niveau si le bouton d'alimentation est enfoncé et que la durée d'appui dépasse la durée prédéfinie.

5. Le procédé selon l'une quelconque des revendications 1 à 4, dans lequel le procédé comprend en outre :
enregistrement (S513) d'un événement de pression longue et d'un état de mise à niveau si le bouton d'alimentation est enfoncé et que la durée d'appui dépasse la durée prédéfinie.

6. Le procédé selon la revendication 5, dans lequel, après la mise à niveau (S509) du dispositif terminal sur la base de la version cible du BIOS si l'alimentation de la batterie est supérieure à 30 % ; ou si la durée d'appui du bouton d'alimentation n'excède pas la durée prédéfinie, le procédé comprend en outre :
comptage (S519) de l'événement de pression longue et de l'état de mise à niveau pour analyser la cause d'un échec de mise à niveau.

7. Un dispositif électronique, comprenant : un processeur et une mémoire, dans laquelle
la mémoire contient des instructions informatiques ; et
le processeur exécute les instructions informatiques stockées dans la mémoire,
et lorsque le dispositif électronique exécute les instructions informatiques, le dispositif électronique réalise le procédé selon l'une quelconque des revendications 1 à 6.

8. Un support de stockage lisible par ordinateur, dans lequel le support de stockage lisible par ordinateur contient un programme ou des instructions informatiques, et lorsque le programme ou les instructions sont exécutés sur un dispositif électronique, le procédé selon l'une quelconque des revendications 1 à 6 est réalisé.

9. Un produit de programme informatique, comprenant des instructions qui, lorsque le programme est exécuté par un dispositif électronique, amènent le dispositif électronique à effectuer le procédé selon l'une quelconque des revendications 1 à 6.
